# EUROPEAN PATENT SPECIFICATION

(11) **EP 1 515 907 B1**
(45) Date of publication and mention of the grant of the patent: **23.08.2006**
(21) Application number: 03730289.0
(22) Date of filing: 18.06.2003
(51) Int. Cl.: B65H 57/02, B65H 23/02, C03B 37/16, G02B 6/25

(54) **ARRANGEMENT IN FIBRE PROCESS**
ANORDNUNG IN EINEM FASERPROZESS
DISPOSITIF DANS UN PROCESSUS DE TRAITEMENT DE FIBRE

(30) Priority: 24.06.2002 FI 20021231
(43) Date of publication of application: 23.03.2005
(73) Proprietor: Nextrom Oy, 01511 Vantaa (FI)
(72) Inventor: VEIJANEN, Paavo, FIN-00780 Helsinki (FI)
(74) Representative: Valkeiskangas, Tapio Lassi Paavali
(86) International application number: PCT/FI2003/000498
(87) International publication number: WO 2004/000708

(56) References cited:
- EP-A2- 0 297 271
- DE-A1- 19 922 893
- US-A- 4 528 507
- US-A- 5 016 831
- US-A- 5 132 619
- US-A- 5 297 062
- US-A- 5 727 722
- US-B1- 6 220 135

## Description

The invention relates to an arrangement in a fibre process, which arrangement is equipped with control and pulling means for directing fibre or the like along a desired run and, if necessary, with cutting means for cutting the fibre or the like at a time instant depending on the fibre process. The cutting means can comprise a rotating element that is formed of two parts equipped with gripping surfaces. The fibre or the like is arranged to travel between the gripping surfaces without touching the gripping surfaces before the gripping and/or cutting step, during which the gripping surfaces are arranged to press against each other. The rotating element is arranged to rotate around an axis that is substantially transverse with respect to the direction of travel of the fibre or the like, and a blade means is arranged to the edge of one part of the rotating element or close thereto to cut the fibre or the like as a result of the rotation of the rotating element, whereby the free end of the fibre or the like is arranged to wind around the rotating element.

Arrangements of this kind are today known especially in the cabling processes of optical fibres, wherein the aim is to shorten the mounting time as much as possible during product replacement. The earlier solutions were based on arrangements, in which the fibres were arranged to pass through a pulling device and after the pulling device in the direction of travel of the fibre, a cutting device was mounted to cut the fibre at the desired moment.

One drawback with the prior-art solutions described above is that after cutting, the free end of the fibre in a way flows out of the pulling device to a waste container, for example, whereby fibre goes to waste until the fibre line can be stopped. The amount of wasted fibre can be significantly high, since line speeds can rise up to thousands of meters per minute. In addition, the solutions were in some cases complex, because controlling the free end of the fibre and directing it to the waste container can be difficult at high speeds in particular.

To eliminate the above-mentioned drawbacks, a solution was developed and disclosed in US patent publication 6,220,135, in which, before the cutting step, the fibres run between parts forming a rotating element. The presently used line speeds are quite high and at high velocities, fibres often tend to vibrate. As a result of the vibration, the fibres easily touch the parts of the rotating element, since it should be noted that the distance between the fibres and the parts of the rotating elements is in the range of millimetres. Even a momentary contact of the fibres with the parts of the rotating elements causes a jerk that shows in the product as a variation of diameter and excess fibre length.

To eliminate the above-mentioned vibration problem, different separate controllers have been used to direct the fibres to run through the mid-section of the gap between the parts of the rotating element. These controllers always need to be tuned during start-up, so their use is difficult and slows down the start-up of the line.

It is an object of the invention to provide an arrangement, by means of which the drawbacks of the prior art can be eliminated. This is achieved by the arrangement of the invention. The arrangement according to the basic idea of the invention is characterized in that on both sides of the fibre-gripping surfaces, control means are arranged to move according to the movement of the gripping surfaces and to prevent a random contact between the fibre or the like and the gripping surfaces. An arrangement according to a parallel embodiment of the basic idea of the invention is, in turn, characterized in that to both parts of the rotating element or close thereto, on both sides of the gripping surface, control means are arranged to prevent the fibre or the like from vibrating between the gripping surfaces and to thus prevent the fibre or the like from randomly touching the gripping surfaces.

The advantage of the invention is above all that with the invention, the harmful vibration of the fibres can be eliminated without any difficult tuning action that slows down production. A further advantage is that the invention enables a very efficient control of the fibres, whereby the dampening of vibration is also efficient. A yet further advantage of the invention is that threading the fibres through the cutting means becomes easier, because the fibres need not be threaded through separate controllers, etc.

In the following, the invention will be described in greater detail by means of a preferred embodiment shown in the attached drawing, in which
Figure 1 is a general view of a part of a fibre process that uses the arrangement of the invention,
Figure 2 is a general view of an arrangement of the prior art,
Figure 3 is a general view of the arrangement of the invention just before the cutting step,
Figure 4 is a general view of the arrangement of the invention in the beginning of the cutting step,
Figure 5 is a general side view of a detail in an embodiment of the arrangement of the invention, and
Figure 6 shows the detail of Figure 5 from the top.

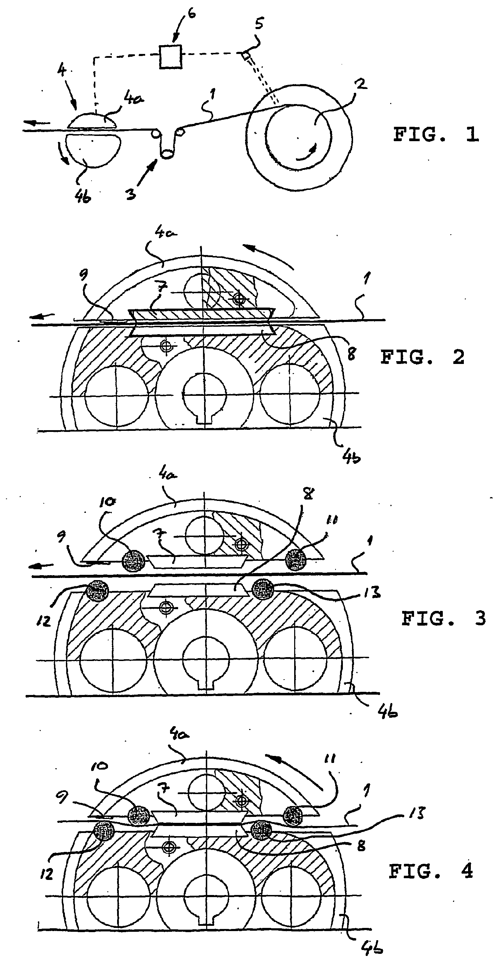

Figure 1 is a general view of a part of a fibre process that uses the arrangement of the invention. Reference number 1 marks the fibre or the like that can be an optical fibre, fibre bundle or some other corresponding elastic, elongated element. Reference number 2 marks a roll, from which the fibre or the like is unwound for an action, such as for the fibre jacket step, dyeing step, mechanical testing step or some other step. Reference number 3 marks an accumulator for controlling the tension acting on the fibre or the like 1. Reference number 4 marks the cutting means for cutting the fibre or the like and for gripping the free end of the fibre or the like. In Figure 1, reference number 5 marks a sensor that monitors the speed of the fibre or the like. The sensor 5 can be an ultrasound sensor, for instance. In Figure 1, reference number 6 marks devices used to rotate the means 4 and to adjust the rate of rotation.

The above-mentioned cutting means 4 comprise a rotating element that is made up of two parts 4a, 4b, between which the fibre or the like 1 runs before the cutting step without touching the parts 4a, 4b.

The parts 4a, 4b are equipped with gripping surfaces 7, 8, which are made of a rubber material, for instance, and which are, in the cutting step, arranged to grip the fibre or the like. The gripping surfaces 7, 8 are especially clearly shown in Figure 2 that shows a prior-art cutting means in the beginning of the cutting step. In the embodiment of the figures, the gripping surfaces are pressed against each other in the beginning of the cutting step. The rotating element 4 is arranged to rotate around an axis that is substantially transverse to the direction of travel of the fibre or the like when the fibre or the like 1 is being cut. The above rotation is shown by means of an arrow in the figures. The fibre or the like 1 needs to be cut for instance when the fibre is dyed with difference colours. A blade means 9 is arranged on the edge of one part of the rotating element or close thereto in such a manner that as a result of the rotation of the rotating element it presses against the fibre or the like and cuts the fibre or the like. In the example of Figure 2, the blade means 9 is a separate part located close to the edge of the part 4a. The blade means 9 can naturally also be formed in such a manner that the edge of the part in question is the blade means.

After the fibre or the like 1 is cut, its free end is between the gripping surfaces 7, 8 that are pressed together, whereby the fibre or the like winds around the rotating element and, at the same time, fastens to the rotating element, whereby the free end is caught in a controlled manner for the slowing down of the line.

A person skilled in the art is familiar with the matters described above, so they need not be described in more detail herein. With respect to the structure and operation of the cutting means, reference is made herein to the US patent publication 6,220,135 mentioned earlier, in which they are described in greater detail.

As earlier mentioned, a drawback with the prior-art solutions is that the fibre or the like tends to vibrate between the parts 4a, 4b during operation, whereby the fibre or the like 1 easily touches the part 4a or 4b. This contact results in problems as mentioned above.

To eliminate the above-mentioned problem, the arrangement of Figures 3 and 4 has control means 10, 11, 12, 13 arranged on both parts 4a, 4b of the rotating element 4 or close thereto, close to the gripping surface 7, 8, on both sides of the gripping surfaces, and moving with the movement of the gripping surfaces. The control means 10, 11, 12, 13 are arranged to prevent the fibre or the like 1 from vibrating between the gripping surfaces 7, 8 and thus to prevent the fibre or the like 1 from randomly touching the gripping surfaces 7, 8. The control means 10, 11, 12, 13 can be arranged to both parts 4a, 4b of the rotating element 4, on both sides of the gripping surface 7, 8, as shown in Figures 3 and 4, in which case they move in the same way as the gripping surfaces. The control means can, however, also be made into stationary parts, and they can also be located outside the rotating element.

The invention is based on the idea that by installing the control means 10, 11, 12, 13 immediately on both sides of the gripping surfaces 7, 8, they prevent the fibre or the like from harmfully vibrating at the gripping surfaces 7, 8 and ensure that the fibre or the like does not touch the gripping surfaces. The operation of the control means 10, 11, 12, 13 is clearly shown in Figures 3 and 4.

In the embodiment of Figures 3 and 4, the control means 10, 11 arranged on both sides of one gripping surface 7 are arranged in a stepped position as seen from the direction of travel of the fibre or the like 1, relative to the control means 12, 13 arranged on both sides of the other gripping surface 8. The above-mentioned positioning prevents the control means from touching each other in the beginning of the cutting stage, when the gripping surfaces 7, 8 are pressed against each other as shown in Figure 4.

Instead of the stepped position, it is possible to place a suitable mechanism to the control means to keep the control means separate from each other when the gripping surfaces are pressed against each other.

In the example of the figures, the control means 10, 11, 12, 13 are rod-like elements. The control means can be made of any suitable material. Examples of suitable materials are ceramic materials that are especially advantageous when the control means are formed in such a manner that they touch the fibre or the like. The control means can also be formed in such a manner that they do not touch the fibre or the like.

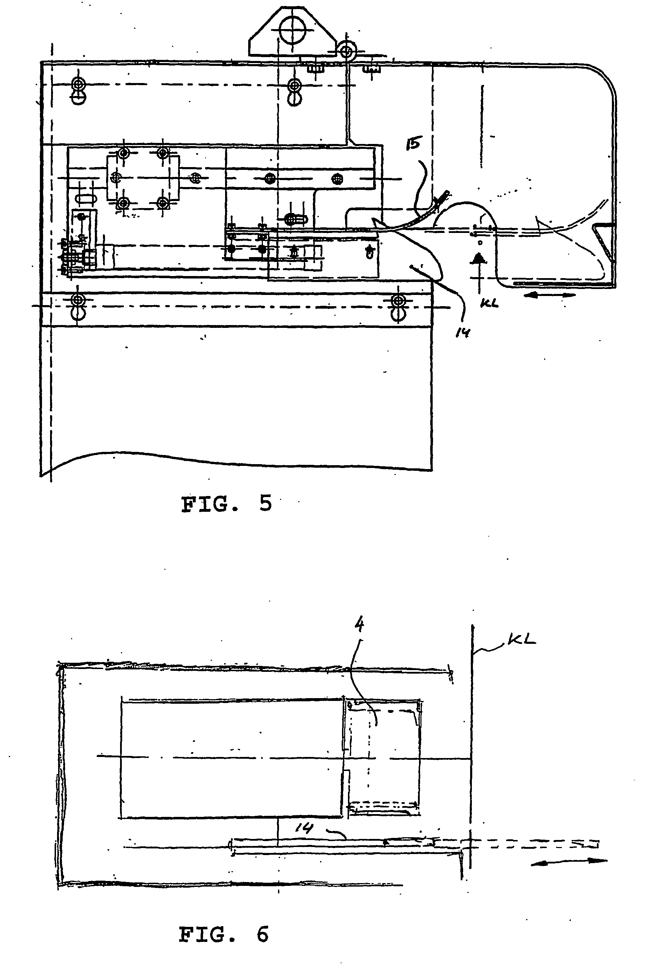

The embodiment described above is not in any way intended to limit the invention, but the invention can be freely modified within the scope of the claims. Therefore, it is apparent that the arrangement of the invention or its details need not be exactly as described in the figures, and solutions of other type are also possible. The invention can be applied in such a manner, for instance, that the fibre or the like runs all the time between the parts of the cutting means before the cutting step, or alternatively in such a manner that the fibre or the like is transferred to run between the cutting means just before the cutting step. Figures 5 and 6 show a device with which the fibre or the like can be transferred just before the cutting step to run between the parts of the cutting means arranged aside from the fibre line shown in Figures 3 and 4. The device of Figures 5 and 6 is arranged close to the cutting means 4. The device can be arranged to the same body with the cutting means 4, for instance. An essential part in the device is a moving transfer device, i.e. in the example of the figures, a hook means 14 that is arranged to move from an outward position, marked by dashed lines in Figures 5 and 6, to an inward position, marked with continuous lines in Figures 5 and 6. The line of travel of the fibre or the like is marked with reference marking KL in Figures 5 and 6. When the hook means moves from the outward position to the inward position, it grips the fibre or the like at the same time and pulls the fibre or the like aside from the line of travel KL of the fibre and guides the fibre or the like to the nip between the parts of the cutting means 4, as shown in Figure 3. The movement of the hook means 14 can be provided by means of a suitable actuator, such as a pneumatic cylinder.

The hook means 14 of the device according to Figures 5 and 6 thus pushes during its movement to the line of travel KL of the fibre or the like, collects the fibres together, if there are many of them, and pulls the fibre or the like to the nip of the cutting means aside from the line of travel of the fibre. The fibres are controlled by means of a guide plate 15. The guide plate 15 can be formed of an elongated sheet-like and curving part, as shown in Figure 5. If there are several fibres, the guide plate 15 can also be used in such a manner that the hook means 14 collects the fibres against the edge of the guide plate and, using the edge as a counter-surface, collects the fibres into a bundle and then transfers the bundle into the nip.

The movement rates of the device of Figures 5 and 6 are optimized in the control logic of the device. The solution can execute the cutting process within a few hundred milliseconds.

The device of Figures 5 and 6 provides the advantage that the fibres do not run through the nip of the cutting means during production run, so any fibres that possible remain in the nip from the previous time cannot attach to the fibres being processed and end in the product with them. By means of the device described above, it is also possible to prevent the fibres from touching the cutting means during run. Another advantage is that production time is not used to rewind the cutting means. The rewinding can take place when the new fibres are already being processed.

The gripping surfaces can be formed as described in the figures, or they can be formed in such a manner that the entire surfaces of the rotating element parts pressing against each other constitute the gripping surfaces. The invention can be used not only with optical fibres or fibre bundles, but also with other fibres and fibre bundles and threads and thread bundles. The invention can also be used elsewhere than in the fibre cutting means, as shown in the above example; it can be applied even more extensively, in other words, even without a cutting means fixed to the structure. The cutting means can be a separate mechanism, if necessary. Examples of such an application are lines for further treatment of fibre or the like, in which the line needs to be stopped for an action, such as chopping or measurement, and the aim is to keep the fibres in the forward end of the line in line so as to avoid re-pulling the fibres into the line before re-starting it. In this case, the gripping surfaces merely grip the fibre or the like so as to keep it from escaping or causing unnecessary extra work when the line is re-started. A device designed for just gripping can be similar to that described in the figures of this application, but without the cutting blade, the structure also does not need to rotate as described in the figures.

## Claims

1. An arrangement in a fibre process, which arrangement is equipped with control and pulling means for directing fibre along a desired run and with means equipped with gripping surfaces (7, 8) for gripping the fibre or the like (1), between which gripping surfaces (7, 8), the fibre or the like (1) is arranged to run without touching the gripping surfaces before the gripping step, in which the gripping surfaces (7, 8) are arranged to press against each other, **characterized in that** on both sides of the fibre-gripping surfaces (7, 8), control means (10, 11, 12, 13) are arranged to move according to the movement of the gripping surfaces (7, 8) and to prevent a random contact between the fibre or the like (1) and the gripping surfaces (7, 8).

2. An arrangement in a fibre process, which arrangement is equipped with control and pulling means for directing fibre or the like (1) along a desired run and with cutting means (4) for cutting the fibre or the like (1) at a time instant depending on the fibre process, the cutting means (4) comprising a rotating element that is formed of two parts (4a, 4b) equipped with gripping surfaces (7, 8), between which gripping surfaces, the fibre or the like (1) is arranged to run without touching the gripping surfaces before the gripping step, in which the gripping surfaces (7, 8) are arranged to press against each other, and the rotating element (4) being arranged to rotate around an axis that is substantially transverse with respect to the direction of travel of the fibre or the like, and a blade means (9) is arranged close to the edge of one part (7) of the rotating element to cut the fibre or the like (1) as a result of the rotation of the rotating element, whereby the free end of the fibre or the like is arranged to wind around the rotating element (4), **characterized in that** to both parts (4a, 4b) of the rotating element (4) or close thereto, on both sides of the gripping surface (7, 8), control means (10, 11, 12, 13) are arranged to prevent the fibre or the like (1) from vibrating between the gripping surfaces (7, 8) and to thus prevent the fibre or the like (1) from randomly touching the gripping surfaces (7, 8).

3. An arrangement as claimed in claim 1 or 2, **characterized in that** the control means (10, 11) arranged on both sides of one gripping surface (7) are arranged in a stepped position as seen from the direction of travel of the fibre or the like (1), relative to the control means (12, 13) arranged on both sides of the other gripping surface (8).

4. An arrangement as claimed in claim 3, **characterized in that** the control means (10, 11, 12, 13) are rod-like elements.

5. An arrangement as claimed in claim 3, **characterized in that** the rod-like element are made of a ceramic material.

6. An arrangement as claimed in any one of the preceding claims 2 to 5, **characterized in that** the control means (10, 11, 12, 13) are arranged to move with the movement of the gripping surfaces (7, 8).

7. An arrangement as claimed in any one of the preceding claims 2 to 6, **characterized in that** rotating element (4) equipped with the control means (10, 11, 12, 13) is arranged aside from the line (KL) of travel of the fibre or the like and that the fibre or the like is arranged move aside from the line of travel of the fibre by means of a transfer means and to enter between the parts (4a, 4b) of the rotating element.

8. An arrangement as claimed in claim 7, **characterized in that** the moving transfer means (14) is a hook means.

9. An arrangement as claimed in claim 8, **characterized in that** to the hook means, a guide plate (15) is arranged to act as a counter-surface.

## Patentansprüche

1. Anordnung in einem Faserprozess, wobei die Anordnung mit Steuerungs- und Zugmitteln ausgerüstet ist, um die Faser entlang einer gewünschten Strecke zu leiten und mit einem Mittel, das mit Greifoberflächen (7, 8) ausgerüstet ist, um die Faser oder dgl. (1) zwischen den Greifoberflächen (7, 8) zu fassen, wobei die Faser oder dgl. (1) so angeordnet ist, dass sie so verläuft, dass sie die Greifoberflächen nicht vor dem Greifschritt berührt, und wobei die Greifoberflächen (7, 8) so angeordnet sind, dass sie gegeneinander gepresst werden, **dadurch gekennzeichnet, dass** auf beiden Seiten der Faser-Greifoberflächen (7, 8) Steuerungsmittel (10, 11, 12, 13) so angeordnet sind, dass sie sich entsprechend der Bewegung der Greifoberflächen (7, 8) bewegen und einen unkontrollierten Kontakt zwischen der Faser oder dgl. (1) und den Greifoberflächen (7, 8) verhindern.

2. Anordnung in einem Faserprozess, wobei die Anordnung mit Steuerungs- und Zugmitteln ausgerüstet ist, um die Faser oder dgl. (1) entlang einer gewünschten Strecke zu leiten und mit einem Schneidmittel (4) zum Abschneiden der Faser oder dgl. (1) in einem Zeitpunkt, der vom Faserprozess abhängt, wobei das Schneidmittel (4) ein rotierendes Element aufweist, das aus zwei Teilen (4a, 4b) gebildet ist, die mit Greifoberflächen (7, 8) ausgerüstet sind, wobei zwischen diesen Greifoberflächen die Faser oder dgl. (1) so angeordnet ist, dass sie so verläuft, dass sie die Greifoberflächen nicht vor dem Greifschritt berührt, und wobei die Greifoberflächen (7, 8) so angeordnet sind, dass sie gegeneinander gepresst werden und das rotierende Element (4) so angeordnet ist, dass es sich um eine Achse dreht, die im Wesentlichen quer zur Richtung des Wegs der Faser oder dgl. verläuft, und ein Schneidenmittel (9) nahe der Kante des einen Teils (7) des rotierenden Elements angeordnet ist, um die Faser oder dgl. (1) aufgrund der Drehung des rotierenden Elements abzuschneiden, wodurch das freie Ende der Faser oder dgl. so angeordnet ist, dass es sich um das rotierende Element (4) wickelt, **dadurch gekennzeichnet, dass** Steuerungsmittel (10, 11, 12, 13) an beiden Teilen (4a, 4b) des rotierenden Elements (4) oder nahe an diesen angeordnet sind, um zu verhindern, dass die Faser oder dgl. (1) zwischen den Greifoberflächen (7, 8) vibriert und so einen unkontrollierten Kontakt zwischen der Faser oder dgl. (1) und den Greifoberflächen (7, 8) zu verhindern.

3. Anordnung nach Anspruch 1 oder 2, **dadurch gekennzeichnet, dass** die an beiden Seiten einer Greifoberfläche (7) angeordneten Steuerungsmittel (10, 11) in einer Stufenposition bei Blickrichtung in Richtung des Wegs der Faser oder dgl. (1) relativ zu den Steuerungsmitteln (12, 13) angeordnet sind, die an beiden Seiten der anderen Greifoberfläche (8) angeordnet sind.

4. Anordnung nach Anspruch 3, **dadurch gekennzeichnet, dass** die Steuerungsmittel (10, 11, 12, 13) stabartige Element sind.

5. Anordnung nach Anspruch 3, **dadurch gekennzeichnet, dass** die stabartigen Elemente aus einem Keramikmaterial bestehen.

6. Anordnung nach einem der vorigen Ansprüche 2 bis 5, **dadurch gekennzeichnet, dass** die Steuerungsmittel (10, 11, 12, 13) so angeordnet sind, dass sie sich mit der Bewegung der Greifoberflächen (7, 8) bewegen.

7. Anordnung nach einem der vorigen Ansprüche 2 bis 6, **dadurch gekennzeichnet, dass** das mit den Steuerungsmitteln (10, 11, 12, 13) ausgerüstete rotierende Element (4) neben der Linie (KL) des Wegs der Faser oder dgl. angeordnet ist und dass die Faser oder dgl. so angeordnet ist, dass sie von einem Transfermittel aus der Linie des Wegs der Faser bewegt und zwischen die Teile (4a, 4b) des rotierenden Elements eingeführt wird.

8. Anordnung nach Anspruch 7, **dadurch gekennzeichnet, dass** das bewegliche Transfermittel (14) ein Hakenmittel ist.

9. Anordnung nach Anspruch 8, **dadurch gekennzeichnet, dass** am Hakenmittel eine Führungsplatte (15) angeordnet ist, um als Gegenfläche zu fungieren.

## Revendications

1. Dispositif dans un processus de traitement de fibre, lequel dispositif est équipé d'un moyen de commande et de tirage permettant de diriger la fibre le long d'un trajet souhaité et de moyens équipés de surfaces de saisie (7, 8) destinées à saisir la fibre ou similaire (1), surfaces de saisie (7, 8) entre lesquelles la fibre ou similaire (1) est agencée pour passer sans toucher les surfaces de saisie avant l'étape de saisie, pendant laquelle les surfaces de saisie (7, 8) sont agencées pour s'appuyer l'une contre l'autre, **caractérisé en ce que** sur les deux côtés des surfaces de saisie des fibres (7, 8), des organes de commande (10, 11, 12, 13) sont agencés pour se déplacer en suivant le mouvement des surfaces de saisie (7, 8) et pour empêcher un contact aléatoire entre la fibre ou similaire (1) et les surfaces de saisie (7, 8).

2. Dispositif dans un processus de traitement de fibre, lequel dispositif est équipé d'un moyen de commande et de tirage permettant de diriger la fibre ou similaire (1) le long d'un trajet souhaité et d'un moyen de coupe (4) permettant de couper la fibre ou similaire (1) à un instant qui dépend du processus de traitement de fibre, le moyen de coupe (4) comprenant un élément rotatif formé de deux parties (4a, 4b) équipées de surfaces de saisie (7, 8), surfaces de saisie entre lesquelles la fibre ou similaire (1) est agencée de manière à passer sans toucher les surfaces de saisie avant l'étape de saisie pendant laquelle les surfaces de saisie (7, 8) sont agencées pour s'appuyer l'une contre l'autre, et l'élément rotatif (4) est agencé pour tourner autour d'un axe qui est sensiblement transversal par rapport à la direction de circulation de la fibre ou similaire, et un moyen formant lame (9) est agencé à proximité du bord d'une partie (7) de l'élément rotatif pour couper la fibre ou similaire (1) sous l'action de la rotation de l'élément rotatif, l'extrémité libre de la fibre ou similaire étant ainsi agencée pour s'enrouler autour de l'élément rotatif (4), **caractérisé en ce que** sur les deux parties (4a, 4b) de l'élément rotatif (4) ou à proximité de celles-ci, des organes de commande (10, 11, 12, 13) sont agencés des deux côtés de la surface de saisie (7, 8) pour empêcher la fibre ou similaire (1) de vibrer entre les surfaces de saisie (7, 8) et pour ainsi empêcher la fibre ou similaire (1) de toucher aléatoirement les surfaces de saisie (7, 8).

3. Dispositif selon la revendication 1 ou 2, **caractérisé en ce que** les moyens de commande (10, 11) disposés des deux côtés d'une surface de saisie (7) sont agencés dans une position étagée vue de la direction de circulation de la fibre ou similaire (1), par rapport aux moyens de commande (12, 13) qui sont disposés des deux côtés de l'autre surface de saisie (8).

4. Dispositif selon la revendication 3, **caractérisé en ce que** les moyens de commande (10, 11, 12, 13) sont des éléments formant tige.

5. Dispositif selon la revendication 3, **caractérisé en ce que** les éléments formant tige sont constitués d'un matériau céramique.

6. Dispositif selon l'une quelconque des revendications précédentes 2 à 5, **caractérisé en ce que** les moyens de commande (10, 11, 12, 13) sont agencés pour se déplacer en suivant le mouvement des surfaces de saisie (7, 8).

7. Dispositif selon l'une quelconque des revendications précédentes 2 à 6, **caractérisé en ce que** l'élément rotatif (4) équipé des moyens de commande (10, 11, 12, 13) est disposé à l'écart de la ligne (KL) de circulation de la fibre ou similaire et que la fibre ou similaire est agencée pour se mettre à l'écart de la ligne de circulation de la fibre avec un moyen de transfert et pour pénétrer entre les parties (4a, 4b) de l'élément rotatif.

8. Dispositif selon la revendication 7, **caractérisé en ce que** le moyen de transfert mobile (14) est un moyen à crochet.

9. Dispositif selon la revendication 8, **caractérisé en ce qu'**une plaque de guidage (15) est disposée pour servir de contre-surface au moyen à crochet.
